# EUROPEAN PATENT APPLICATION

(11) **EP 4 527 821 A1**
(43) Date of publication of application: **26.03.2025**
(21) Application number: 23198724.9
(22) Date of filing: 21.09.2023
(51) Int. Cl.: C05B 7/00, C01B 25/45, C05B 13/02, C05B 13/06

(54) **PROCESS FOR PREPARING BIO-AVAILABLE PHOSPHATE FROM SEWAGE SLUDGE**

(71) Applicant: amaTEQ Holding GmbH, 48143 Münster (DE)
(72) Inventor: Kehrmann, Alexander, 48143 Münster (DE)
(74) Representative: Hoffmann Eitle

(57) **Abstract**

The claimed invention relates to a process for the treatment of a material comprising one or more phosphate compounds with low solubility in water, wherein the process comprises the steps of:
i) introducing said material comprising one or more phosphate compounds, an alkali metal compound and an organic material as feed materials into a reactor, and
ii) heating these feed materials at 750-1100 °C, preferably 850-1000 °C.

## Description

### Field of the Invention

The present invention is directed to a process for treating materials containing phosphate with low solubility that allows the phosphate to be converted into a form that allows its uptake by plants.

### Background of the Invention

Phosphorus is a nutrient that is essential for the growth of plants. In view thereof, phosphate fertilizers have seen widespread use in the agricultural industry. However, natural phosphate resources are limited and in constant decline. In view thereof, it would be desirable to develop alternative sources of plant-available phosphorous.

Well-known materials that comprise phosphates are sewage sludge and sewage sludge ash obtained after incineration of sewage sludge. However, the phosphate contained in these materials generally is not in a form that allows its uptake by plants.

A known process for treating phosphate-containing materials that allows phosphates to be converted into a form in which it can be taken up by plants is a process wherein the phosphate-containing materials are mixed with alkaline additives and heated to high temperatures. However, the existing implementations of such a process suffer from the shortcoming that, in order to be economically viable, they require the benefit of economy of scale. Thus, it would be necessary to construct a treatment facility of significant size, and to provide a steady supply of sewage sludge from a number of sewage treatment plants, when wanting to rely thereon for the generation of bio-available phosphates from sewage sludge.

The present inventors posed themselves the task of developing a means that makes possible the on-site generation of bio-available phosphates from sewage sludge. Furthermore, they sought to develop a process that can be operated on small and intermediate-scales and which relies on machinery that can be based on a mobile platform, so as to not only allow the process to be implemented directly at the location where the raw material, i.e. the sewage sludge, is generated, but also to allow one set of machinery to be employed at multiple locations, i.e. different sewage treatment plants, on a flexible schedule.

WO 2015/189333 discloses a process of thermal treatment of materials containing phosphate with low solubility comprising:
Providing a raw material comprising whitlockite Ca₉ (Mg,Fe²⁺)[PO₃(OH)|(PO₄)₆], and/or iron phosphate FePO₄, and/or aluminium phosphate AlPO₄ and/or fluorapatite Ca₅(PO₄)₃F, and further providing an alkaline-sulfuric compound as an additive. Calcining a mixture of the raw material with the additive to obtain a product comprising a citrate soluble phosphate compound.

This process allows converting the raw materials into a product which, in contrast to whitlockite, iron phosphate, aluminium phosphate and fluorapatite, easily releases a bioavailable phosphate that can be used for fertilizing purposes. The bioavailable phosphorus is mainly in form of CaNaPO₄.

The alkaline-sulfuric compound used in this process is a sodium-sulfuric compound such as Na₂S, Na₂SO₃ or Na₂SO₄.

The process includes a reducing stage followed by an oxidizing stage.

The reducing stage is necessary to elicit the chemical reactions whereby the starting compounds are decomposed and the desired phosphate compounds are built. However, under reducing conditions sulfur is incorporated in hardly soluble, pyrite type iron-sulfur-compounds (Fe₇S₈).

Therefore, an oxidizing stage downstream of the reducing stage in the same reactor is suggested for obtaining water soluble sulfuric compounds with sodium sulfate as a main phase.

### Problem to be solved

In the prior art process there is a need for both, oxidizing and reducing reactions in the thermal reactor. Controlling both, oxidizing and reducing reactions in the thermal reactor is highly challenging and can lead to unwanted problems, e.g. insufficient solubilization of the insoluble phosphate compounds, insufficient removal of heavy metals like Pb.

### Means for solving the Problem

It has been found that utilizing an indirectly heated rotary thermal reactor, preferably with at least two temperature zones, can overcome the problems involved in the prior art process.

The subject of the invention is a process for treatment of a material comprising one or more phosphate compounds with low solubility, wherein the process comprises the steps of:
i) introducing said material comprising one or more phosphate compounds, an alkali metal compound and an organic material as feed materials into a reactor, and
ii) heating these feed materials at 750-1100 °C, preferably 850-1000 °C,
characterized in that the thermal treatment is carried out using an indirectly heated rotary thermal reactor.

The process yields a citrate soluble phosphate compound.

Low solubility means a fraction of less than 70%, preferably less than 60%, most preferably less than 50% of phosphorus is soluble in neutral ammonium citrate solution.

Determination of phosphorus solubility: A 1 g sample is placed in a volumetric flask (250 cm³) with addition of 100 cm³ of 65 °C neutral ammonium citrate solution and shaken in a heated water bath for 1 h at 65 °C. After 1 h, the volumetric flask with solution was topped up to 250 cm³ with cool deionized water. The obtained solution is filtered, with the first 50 cm³ of the filtrate being discarded. For ICP-OES analysis, 0.1 cm³ of the filtrate (P_{NAC}) is diluted with an acid solution (15 cm³ 65% HNO₃ to 500 cm³ deionized water) .

Preferably, the indirectly heated rotary thermal reactor is a multi-zone reactor with at least two different temperature zones.

Preferably the unit comprises a water-based ejector style scrubber for the off-gas with a water spray, and the velocity of the spray is at least 50 m/s.

The present invention is associated with a number of advantageous effects. These include, but are not limited to the following:
1. Providing a unit / process for the thermal treatment of a material comprising one or more phosphate compounds with low solubility on a commercial scale which improves CO₂ emission levels and allows a better control of the temperature during the thermal treatment stage.
2. Improvement in energy efficiency.
3. Efficient and low-cost off-gas treatment system.

### Detailed Description

Embodiments according to the present invention will now be described in more detail.

The objectives of the present invention are achieved by the implementation of an indirect-fired rotary multi-zone thermal reactor for the treatment of a material comprising one or more phosphate compounds with low solubility.

In one embodiment the process according to the present invention involves the use of a unit for the treatment of a material comprising one or more phosphate compounds with low solubility that comprises:
an indirect-fired rotary multi-zone thermal reactor with at least two different temperature zones,
a pre-treatment duct, and
a vapour recovery unit comprising a water-based ejector style scrubber, a water cooling and circulation assembly, and a water collection tank.

In one embodiment, the disassembled unit employed in the process according to the invention can be made mobile as the parts fit into a series of shipping containers. This has the advantage that the unit is easily transported to/from a specific job site.

In an embodiment according to the invention, the unit employed in the process (and/or the process) allows for high-volume continuous feed processing.

The individual components of the unit employed in the process according to the present invention will now be described in more detail, including optional and preferred embodiments. The following description of the embodiments is equally applicable to the process according to the present invention.

### Feed Hopper

In one embodiment, the unit for the treatment of a material comprising one or more phosphate compounds with low solubility comprises a hopper equipped with a live bottom feed.

Utilising a hopper with a live bottom feed has the advantage of avoiding flowback of the material. Furthermore, it allows the unit to operate as a closed process.

In an embodiment according to the invention, the feed rate can reach up to 7.5 metric tonnes per hour. In an embodiment, the feed rate can be varied from 2.5 to 7.5 metric tonnes per hour. Preferably, the feed rate is from 3.0 to 7.5 metric tonnes per hour. More preferably the feed rate is from 3.5 to 7.5 metric tonnes per hour. Even more preferably the feed rate is from 4.0 to 7.5 metric tonnes per hour. Most preferably the feed rate is from 4.5 to 7.5 metric tonnes per hour.

In an embodiment according to the present invention, the feed hopper is attached to an indirect-fired rotary multi-zone thermal reactor.

### Indirect-fired rotary thermal reactor

In indirect-fired rotary thermal reactors, heat is introduced to the outside of a drum containing the material to be treated. The heat source is not particularly limited, but can include an electrical furnace or a source of combustible materials such as natural gas, waste gas or fuel. Preferably the heat source is an electrical furnace. This has the advantage that it improves the mobility of the unit.

Advantages of the reactor being indirect-fired and rotary include avoiding direct contact between the heat source and the material, providing a better control of the temperatures and allowing the internal processing atmosphere to be controlled.

Electricity as a heat source opens up the possibility of using CO₂-free energy for the thermal treatment, thereby resulting in an even better CO₂ footprint of the products.

In a preferred embodiment a significant overcapacity of equipment is installed, and said equipment is operated merely part-time. Thus, consumption of electricity can be shifted to most favourable times.

For example, the electrically heated reactor may be designed with 200% of nameplate (or nominal) capacity and operated for 50% of the time only. This allows balancing supply and demand of electricity in such a way that high consumption of electricity is activated in times of oversupply (sunny and windy periods and low demand of electricity) and low consumption of electricity is established in times of shortage of electricity (dark and windless periods and high demand of electricity).

The advantages of lower cost for electricity generally overcome the higher investment for the higher nameplate capacity.

In a further embodiment, the feed material enters the system at ambient temperature.

In an embodiment, the reactor can be heated up to 1200 °C. Preferably the reactor is heated to temperatures of from 850 °C to 1000 °C. The temperatures are defined as the temperatures of the outside reactor wall in the middle of a temperature zone.

The term temperature zone refers to a section of the reactor in which the energy input can be controlled independently of adjacent sections and wherein the amount of thermal energy supplied per unit surface area of the reactor is kept constant throughout the temperature zone (variation of less than 10%, preferably less than 5%).

It is possible for there to exist sections of the reactor that are not temperature zones, e.g. non-heated sections.

In a preferred embodiment, the total retention time of the material in the temperature zones of the reactor is at least 30 minutes.

In an embodiment according to the invention, the reactor can be adjusted to manage dwell time (retention time) by adjusting the angle and speed. Adjusting the retention time has the advantage that the removal of all volatile compounds from the material is ensured. Furthermore, the ability to adjust the retention time has the advantage that there is a large flexibility in the types of material that can be used and the level of dehydration achieved. For example, if it is only required to remove a certain amount of water, the retention time can be decreased.

In a preferred embodiment, the reactor has a sealed feed assembly.

In a preferred embodiment, the reactor has a sealed discharge assembly.

In a preferred embodiment, the reactor has sealed feed and discharge assemblies.

The indirect-fired rotary thermal reactor is an indirect-fired rotary multi-zone thermal reactor with at least two temperature zones.

The reactor is an indirect-fired rotary multi-zone thermal reactor with at least two temperature zones. Preferably, the temperature(s) in the initial temperature zone(s) is/are set to vaporise free water, and the temperature(s) of the later temperature zone(s) is set to vaporise crystal water. An advantage is that the multi-zone system allows the reactor temperature to increase in a controlled manner along with the material moving through the reactor in a continuous process.

The indirect-fired rotary multi-zone thermal reactor has at least two temperature zones. In the reactor having at least two temperature zones, optionally three or more zones, the temperature in temperature zone 1 (where the materials enter the kiln) is set to 850-1100°C, preferably 900-1050 °C, the temperature in temperature zone 2 (where the materials leave the kiln) is set to 750-1000°C, preferably 800-950 °C. Optionally, between zone 1 and zone 2 there is a temperature zone 3 with temperature set to 950-1200°C.

Heating the material in two, optionally three or more different temperature zones, each with the aforementioned temperature ranges, ensures more efficient processing. The temperature zones can be arranged so as to continually increase the temperature of the material passing through the reactor, i.e. from lowest to highest temperature. However, the temperature zones can also be arranged so as not to continually increase the temperature of the material passing through the reactor. The temperature profile in the reactor may be set in such a way that the third temperature zone in between zone 1 and zone 2 has the highest temperature. This may help to attain a reducing atmosphere in zone 1, a better evaporation of heavy metals like Zn and Pb in zone 3 with the highest temperature, and, subsequently, in zone 2 with a temperature lower than in zone 3 conditions appropriate for the decomposition of organic matter without excessive evaporation of sulfur oxides.

In a preferred embodiment, the material is heated by the shell and lifters configured along the internal walls of the reactor to ensure the most efficient heat transfer.

In an embodiment, the reactor is preferably equipped with a collection unit for the treated material. Equally, in a preferred embodiment, the treated material has a water content of less than 2.0%, 1.8%, 1.6%, 1.4%, 1.2% or 1.0% based on the total mass of the treated material.

In another preferred embodiment, the processed material discharges into a container through a double airlock.

In a preferred embodiment, the processed material discharges into a cooling screw through a double airlock.

In an embodiment, the material is discharged into a cooling screw and stockpiled.

In an embodiment, the flue gas exiting the reactor, is not processed by a thermal oxidiser before entering a scrubber unit.

In the present invention, the flue gas exiting the reactor enters a pre-treatment duct.

### Pre-treatment duct

Vapour from the heated material comprising one or more phosphate compounds with low solubility from the reactor enters a pre-treatment duct, followed by a vapour recovery unit.

The vapour recovery unit comprises a water condensing unit consisting of a water-based ejector style scrubber, a water cooling and circulation assembly, and a water tank.

In a preferred embodiment, the water condensing unit removes at least 80% of water contained in the flue gas. Preferably the water condensing unit removes from 80% to 100%, more preferably from 85% to 99%, even more preferably 90% to 99%, even more preferably 90% to 97%, and most preferably from 90% to 95% of water from the flue gas.

Condensed liquid from the water-based ejector style scrubber enters the water collection tank. In an embodiment, the tank is a recirculating tank.

According to an embodiment of the invention, the condensed liquid from the ejector style scrubber enters a solid-liquid separator.

In an embodiment, the separated water is recirculated. This can be achieved with the water cooling and circulation assembly. In a further embodiment, the separated water is held in a collection tank and then recirculated. These embodiments have the advantage that the water can be captured from the flue gas and can subsequently be used as a scrubber liquid to capture more water from the flue gas entering the scrubber.

The term water as it has been mentioned above includes water comprising some acidic or alkaline compounds for capturing alkaline (e.g. NH₃) or acidic (e.g. SO₂) compounds generated from the thermal treatment in the kiln.

### Optional further scrubbers

In a further embodiment, the invention optionally comprises one or more additional scrubbers. The further optional scrubbers can be arranged in any order.

In a preferred embodiment, one or more of the additional scrubbers are optionally equipped with a recirculating tank.

The unit employed in the process according to the present invention can be used in a process for the treatment of a material comprising one or more phosphate compounds with low solubility. The following embodiments further describe a process according to the present invention for the treatment of a material comprising one or more phosphate compounds with low solubility.

In a preferred embodiment, the total material retention time in the temperature zones is at least 30 min.

In a preferred embodiment, the total material retention time in the reactor is at least 45 min.

In a preferred embodiment, the reactor can process material at up to 1200 °C.

In a preferred embodiment, the reactor has a sealed discharge assembly.

In a preferred embodiment, the reactor has a sealed feed assembly.

In a preferred embodiment, exhaust gas exiting the scrubber of the vapour recovery unit passes through one or more further scrubbers.

In a preferred embodiment, the vapour recovery unit removes at least 80% of water contained in the flue gas.

In a preferred embodiment the exhaust gas exiting the vapour recovery unit contains less than 100 ppm of water.

Preferably, in a first temperature zone (where the materials enter the kiln) the temperature is set to 850-1100°C, and in a second temperature zone (where the materials leave the kiln), the temperature is set to 750-1000 °C.

The purification of the exhaust gas *via* a system including scrubbers provides a more environmentally friendly process.

Preferably the organic material is organic waste, paper sludge, wood, waste comprising wood.

At higher temperatures such organic materials decompose into a carbonaceous material with high surface area that prevents the phosphate compound from being easily washed out. Without such organic materials the BET of the material obtained after the thermal treatment is <50 m²/g; preferably <10 m²/g, most preferably <5 m²/g.

Preferably the organic material has a pH of equal or greater than 3. If the pH is lower than 3, the organic material can be neutralized to a pH of equal or greater than 3 prior to the calcination.

Preferably the organic material has a moisture content of less than 10%. If the moisture content is greater than 10% the organic material can be dried prior to the calcination.

The moisture content corresponds to the weight loss which occurs at 105°C in a drying oven until constant mass is reached. Mass constancy is considered to have been reached when the change in mass between 30-minute weighing intervals is less than 0.1% absolute. The dry matter content (or solids content) in % corresponds to 100% minus residual moisture (in %).

Preferably the material comprising one or more phosphate compounds with low solubility is a composition comprising whitlockite Ca₉(Mg,Fe²⁺)[PO₃(OH)|(PO₄)₆], and/or iron phosphate FePO₄, and/or aluminium phosphate AlPO₄ and/or fluorapatite Ca₅(PO₄)₃F.

Preferably the material comprising one or more phosphate compounds with low solubility is an ash, selected from a sewage sludge ash and a biomass ash obtained from incineration of biomass.

Preferably the alkali metal compound is selected from the group comprising carbonates, bicarbonates and hydroxides of alkaline and earth alkaline metals. More preferably the alkali metal compound is selected from the group comprising sodium carbonate, sodium bicarbonate, potassium carbonate and potassium bicarbonate.

Preferably the alkali metal compound is an alkaline-sulfuric compound, e.g. Na₂S, Na₂SO₃ or Na₂SO₄, and/or a potassium-sulfuric compound, e.g. K₂S, K₂SO₃, or K₂SO₄.

Preferably the alkaline-sulfuric compound is used in an amount such that the combination of feed materials exhibits a molar ratio of alkali metal to phosphorous in the range of 1.1-1.8, preferably 1.3-1.6.

Preferably the alkaline-sulfuric compound is used in an amount such that the combination of feed materials exhibits a molar ratio of alkali metal to silicon in the range of 0.2-0.8, preferably 0.3-0.5.

In a preferred embodiment the sulfur content of the off-gas is minimized by regulating the oxygen concentration of the environment surrounding the material during the heat treatment and/or during cooling in order to avoid the formation of gaseous or volatile sulfur compounds. This may be done by reducing the oxygen concentration of the environment whenever the pH of a solution obtained from off-gas cleaning starts to drift towards lower values, which is an indication of SO₂ emission.

Preferably the off-gas from the thermal treatment is first fed into water without alkaline agents and subsequently is fed into an alkaline solution to capture acidic compounds (SO₂, SO₃).

Preferably the process is utilized for preparing a fertilizer material or a fertilizer.

The invention also relates to a composition comprising a citrate soluble phosphate compound, preferably CaNaPO₄, and exhibiting a BET surface area of more than 5 m²/g; preferably more than 10 m²/g, most preferably more than 50 m²/g. The BET surface area is determined in accordance with ISO 9277:2022 by means of N₂ at 77 K on a sample which is degassed at 140° C for 1 hour and dried. Evaluation is done by multi-point determination (10-point determination).

## Claims

1. Process for the treatment of a material comprising one or more phosphate compounds with low solubility, wherein the process comprises the steps of:
i) introducing said material comprising one or more phosphate compounds, an alkali metal compound and an organic material as feed materials into a reactor,
and
ii) heating these feed materials at 750-1100 °C, preferably 850-1000 °C,
**characterized in that** the thermal treatment is carried out using an indirectly heated rotary thermal reactor.

2. Process according to claim 1, wherein the indirectly heated rotary thermal reactor has two temperature zones.

3. Process according to claim 2, wherein the temperature is set to 850-1100 °C in the first temperature zone, and the temperature is set to 750-1000 °C in the second temperature zone.

4. Process according to claim 2 or 3, wherein the indirect-fired rotary thermal reactor includes a third three temperature zone, wherein, the temperature ranges up to 1200 °C in the third temperature zone, wherein the third temperature zone preferably is located between the first temperature zone and the second temperature zone.

5. Process according to any preceding claim, wherein the total material retention time in the temperature zones is at least 30 min and/or the total material retention time in the reactor is at least 45 min.

6. Process according to any preceding claim, wherein the material comprising one or more phosphate compounds with low solubility is a composition comprising whitlockite Ca₉(Mg, Fe²⁺)[PO₃(OH)|(PO₄)₆], and/or iron phosphate FePO₄, and/or aluminium phosphate AlPO₄ and/or fluorapatite Ca₅(PO₄)₃F.

7. Process according to any preceding claim, wherein the material comprising one or more phosphate compounds with low solubility is an ash, selected from a sewage sludge ash and a biomass ash.

8. Process according to any preceding claim, wherein the alkali metal compound is selected from the group comprising carbonates, bicarbonates and hydroxides of alkaline and earth alkaline metals.

9. Process according to any preceding claim, wherein the alkali metal compound is an alkaline-sulfuric compound.

10. Process according to claim 9, wherein the alkaline-sulfuric compound is a sodium-sulfuric compound, preferably Na₂S, Na₂SO₃ or Na₂SO₄, and/or a potassium-sulfuric compound, preferably K₂S, K₂SO₃, or K₂SO₄.

11. Process according to claim 9 or 1β, wherein the alkaline-sulfuric compound is used in an amount such that the combination of feed materials exhibits a molar ratio of alkali metal to phosphorous in the range of 1.1-1.8, preferably 1.3-1.6.

12. Process according to any one of claims 9-11, wherein the alkaline-sulfuric compound is used in an amount such that the combination of feed materials exhibits a molar ratio of alkali metal to silicon in the range of 0.2-0.8, preferably 0.3-0.5.

13. Process according to any preceding claim, wherein the oxygen concentration of the environment surrounding the material being treated is regulated in response to the pH of a solution obtained from off-gas cleaning during the thermal treatment and/or during cooling.

14. Use of the process according to any preceding claim for preparing a fertilizer material or of a material obtainable by the process according to any preceding claim as a fertilizer.

15. Composition comprising a citrate soluble phosphate compound, preferably CaNaPO₄, and exhibiting a BET surface area of more than 5 m²/g; preferably more than 10 m²/g, most preferably more than 50 m²/g.
